# NEW EUROPEAN PATENT SPECIFICATION

(11) **EP 1 175 776 B2**
(45) Date of publication and mention of the opposition decision: **05.03.2008**
(45) Mention of the grant of the patent: 13.08.2003
(21) Application number: 00926323.7
(22) Date of filing: 24.04.2000
(51) Int. Cl.: H04N 5/00

(54) **VIDEO ON DEMAND SYSTEM**
VIDEO-AUF-ANFRAGE-SYSTEME
SYSTEME DE VIDEO SUR DEMANDE

(30) Priority: 04.05.1999 US 304908
(43) Date of publication of application: 30.01.2002
(73) Proprietor: UNISYS CORPORATION, Blue Bell, PA 19424-0001 (US)
(72) Inventor: SIPPLE, Ralph, E., Shoreview, MN 55126 (US); MCBREEN, James, R., Shoreview, MN 55126 (US); STANTON, Michael, F., Lino Lakes, MN 55014-2123 (US)
(74) Representative: Modiano, Micaela Nadia
(86) International application number: PCT/US2000/011024
(87) International publication number: WO 2000/067470

(56) References cited:
- EP-A- 0 739 136
- EP-A- 0 779 725
- WO-A-96/10315
- US-A- 5 371 532
- US-A- 5 600 573
- US-A- 5 608 448
- US-A- 5 745 710
- [Online] 15 December 1999 (1999-12-15) XP002144894 Retrieved from the Internet: <URL: http://www.unisys.com/news/releases/1999/d ec/12156842.asp> [retrieved on 2000-08-14] the whole document

## Description

### BACKGROUND OF THE INVENTION

**1. Field of the Invention:** The present invention generally relates to digital data transmission of video information and more particularly to the delivery of user selected video information to subscribing users.

**2. Description of the Prior Art:** The mass distribution of video programming signals (i.e., television) was originally accomplished primarily by the broadcasting of a very high frequency (i.e., VHF) carrier containing an amplitude modulated video signal and a frequency modulated audio signal. Through the addition of more broadcasting transmitters, a modest number of different programming signals could be simultaneously distributed to a large number of potential users with a modest capital commitment. Using this technique, the capital commitment increases almost linearly with number of different programming channels within the limits of the available spectrum space for separate and independent carriers.

Within a couple of decades, most of the scarce VHF spectrum space had been committed, and increasing demand for additional programming channels resulted in the allocation of spectrum space in the ultra-high frequency (i.e., UHF) region. Whereas virtually all receivers became UHF compatible, as a matter of policy, and UHF channels were assigned to requesters, it was appreciated that there were no economies of scale through the addition of more broadcast programming channels.

The cable television channel era was the result, wherein a capital commitment was required to wire each user home within a service area. As a result, about one hundred separate programming channels became readily available at a lesser cost than providing the same number of channels using conventional broadcast means. Initially, cable television was simply an analog system in which low power modulated carriers were transferred over a coaxial cable rather than being broadcast into the ether at substantially higher power levels. The cost saving was realized because the broadcasting was accomplished at substantially lower power.

With approximately one hundred different programming channels, it is typical to charge cable service user fees in accordance with a hierarchy of programming channels. The least expensive channels tend to be the preexisting broadcast channels and those cable channels supported primarily by advertisers which are intended for the most general audiences. The subscriber fees to access other channels increase as the programming becomes more specialized, advertising revenue becomes less likely to pay the programming costs, and the programming materials tend to have substantial economic value through other distribution channels. The so-called "premium channels" which show current and/or near current movies without advertising are typical of the higher cost programming options.

Most commercial cable television providers package the various programming channels into programming channel groups with different prices such that a given user can select a suitable programming package and pay the equivalent fee. Typically, a cable provider box, which couples the user television receiver to the coaxial cable source, is controlled by the cable television provider to give access to a given user to only those channels for which the appropriate subscriber fee has been paid.

The most expensive cable television channels currently available are "pay-perview" or PPV. With the PPV concept, a given user can subscribe to a given programming channel for a single individual program of up to several hours for a separate subscriber fee. Typically, PPV channels provide sporting events and almost current movies.

Perhaps the major disadvantage of the PPV concept as currently implemented, is that the programming is provided in the "broadcast" mode. That means that the programming begins and runs on a predefined schedule. As a result, programming is missed if the user receives a telephone call, for example, during the viewing. Furthermore, it ordinarily requires the user to allocate viewing time to coincide with the predefined schedule. To overcome this disadvantage, many users rent video programs as video cassette recordings (i.e., VCR) from commercial stores which provide such a rental service. This permits the viewer to watch the program in accordance with her/his own schedule, stop the program during interruptions, and replay portions of the program which may not be readily understood. The primary disadvantage of the VCR rental approach is the need to physically go to the rental store to obtain the program and return to the rental store to return the recording.

With the capital commitment for cable television in place, their appear to be substantial new uses for the basic coaxial pathway. Such uses include, telephone, computer modem, facsimile, and video conferencing. To properly coordinate such diverse information transmission activities, attention is being directed to digital transmission schemes which provide for easier management of the distribution resources. U.S. Patent No. 5,570,355, issued to Dail et al., discusses the handling of a number of diverse information transmissions within a single system. U.S. Patent No. 5,673,265, issued to Gupta et al., U.S. Patent No. 5,754,773, issued to Ozden et al., and U.S. Patent No. 5,799,017, issued to Gupta et al., all discuss multi-media distribution systems. U.S. Patent No. 5,555,244, issued to Gupta et al., is directed to multimedia distribution to residential users.

International Application WO-A-96-10315 by Anderson and Aune suggested that "pipes" may be used to supply several movie streams to several users "simultaneously", but it does not decrease splitting said movies into small incremental parts. While it shows a transaction server that is coupled to subscriber receivers far transferring video to the subscriber receivers it does not have command and control functions available far the receivers to manipulate the transmission flow.

European Application EP-O-739-136-A2 by Brady et al. provides similar subject matter to that provided by Anderson and Aune, but teaches how to use a RAM buffer to host a plurality of users/receivers from a single disk upload.

For handling user commands, an intricate user interface for VOD systems is taught in U.S. Patent NO. 5,745,710 issued to Clanton, et al. It shows that a user could request intermissions of fixed duration during the playing of a video, but only provides the GUI for such a user control.

The digitization of video results in a great deal of data which must be transferred at a high rate to yield acceptable performance and resolution. By current standards, 3mbits/sec. is considered to be a very acceptable rate. Such high data rates require systems which can provide high data rate transmission. U.S. Patent No. 5,724,543, issued to Ozden et al., U.S. Patent No. 5,699,362, issued to Makam, and U.S. Patent No. 5,826,110, issued to Ozden et al., all concern themselves with high data rate retrieval and transmission. U.S. Patent No. 5,675,573, issued to Karol et al., discusses the management of high data rate bandwidths.

In addition to retrieval and transmission of the required high data rates, there is also the need to provide high speed switching for switching as between data sources and destinations. U.S. Patent No. 5,751,704, issued to Kostic et al., and U.S. Patent No. 5,740,176, issued to Gupta et al., discuss high speed digital switching systems.

Whether it is data storage and retrieval, data transmission, or data switching, the fundamental technological problem associated with digital video results from the sheer volume of digitized video data and the tremendous rate at which it must be provided to the ultimate user for satisfactory performance. One technique for reduction of the volume problem is in reducing the resolution (and hence the volume of data) for those applications for which such reduction is acceptable. U.S. Patent No. 5,623,308 and U.S. Patent No. 5,691,768, both issued to Civanlar et al., directly address the handling of multiple resolution digitized video signals within a single system.

Notwithstanding attempts to reduce the resolutions to the lowest acceptable levels, the total data volume of any commercially useful system will remain high. The most common way to treat extremely high data volumes is through data compression. U.S. Patent No. 5,710,829, issued to Chen et al., U.S. Patent No. 5,742,343, issued to Haskell et al., and U.S. Patent No. 5,619,256, issued to Haskell et al.,. are concerned with digital compression techniques. Specific attention to compression of digitized video is found in U.S. Patent No. 5,764,803, issued to Jacquin et al. Compression of 3-dimensional images is treated by U.S. Patent No. 5,612,735, issued to Haskell et al.

The evolving techniques of digitized video transmission have resulted in a transmission standard, called Asynchronous Transfer Mode (ATM). U.S. Patent No. 5,668,841, issued to Haskell et al., describes data transmission using the ATM standard. An ATM converter is discussed in U.S. Patent No. 5,809,022, issued to Byers et al. U.S. Patent No. 5,724,349, issued to Cloonan et al., suggests an approach to packet switching within an ATM system. An ATM architecture is discussed in U.S. Patent No. 5,781,320, issued to Byers. Interfacing to ATM systems is addressed in U.S. Patent No. 5,842,111, issued to Byers.

A solution to the PPV problems noted above utilizing digitized video has been termed, Video on Demand (or VOD). In a VOD system, digitized video programming is made available to individual cable television subscribers in response to specific requests made by the user. U.S. Patent No. 5,867,155, issued to Williams, describes the use of VOD for a very specialized application. Sea Change, International, has proposed a VOD approach for cable television subscribers. U.S. Patent No. 5,583,561, issued to Baker et al., assigned to the assignee of the present invention, discloses and teaches a complete, modern VOD system employing a centralized architecture utilizing an enterprise server developed by Unisys Corporation.

### SUMMARY OF THE INVENTION

The present invention as defined by claims 1 and 12 overcomes many of the disadvantages found within the prior art by providing a video on demand system which separates the tasks of supplying video to subscribers from the tasks associated with managing the subscriber interface. The key to this approach is to provide an architecture in which the necessary functions are divided into two separate portions. A first hardware and software subsystem, called a video server, is specifically dedicated to retrieving and transmitting the stream of video information. Virtually no other functions are performed by the video server. A second hardware and software subsystem, called the transaction server, handles virtually all other functions including control interface with the subscribers, digitized video data storage, subscriber accounting, etc.

The video server has two primary design criteria. First, it must be highly optimized to handle the extremely high input/output data rates. In essence, this is the sole function of the video server, and therefore, the design of the video server hardware and software are most directed towards this characteristic. Because the role of the video subsystem is simplified and single dimensional, video subsystems utilizing current technology can be produced at a surprisingly low cost.

The second major design criterion of the video server subsystem involves modularity. The addition of active subscribers, each viewing individual video programs (or the same program at different times), tends to increase the total input/output load of the video server subsystem linearly. Therefore, there is great economic incentive to design the video server subsystem in such a manner that the hardware resources to implement the video subsystem may be linearly increased in relatively small (and inexpensive) increments. In the preferred mode of the present invention, the video server subsystem consists of one or more input/output data rate optimized, industry compatible computers operating under a readily available, commercial operating system, such as Windows NT. Using 3 mbits/second per video stream as a standard, each such device can effectively service thousands of different and independent video streams. Within each video server, storage can be added to handle more video programs and communication interfaces can be added to provide more video streams. Therefore, the same design architecture and components are suitable for a wide range of system sizes, and the capital cost to the video programming supplier can be readily determined as further subscribers are added to the system.

Unlike the video server subsystem which is optimized to provide a low cost, highly modular approach to a single function, the transaction server is optimized to provide a low cost approach to a wide and highly expandable variety of functions. In fact, all of the functions of the video on demand system, except for the video streaming function performed by the video server, are accomplished by the transaction server. Typical tasks include: transactional interface with the subscribers, subscriber fee accounting, requested program storage, video server subsystem control, receiving video from a satellite and storing it in an archive, etc. Thus, the ideal hardware/software platform for implementation of the transaction server is a readily expandable, highly flexible, high availability, highly recoverable, realtime oriented mainframe system. In the preferred mode of the present invention, the Unisys 2200 is used to host the transaction server.

In accordance with the present invention, a subscribing user transfers a programming request to the transaction server. The transaction server makes the required subscriber accounting entry and notifies the corresponding preloaded video server platform of the new subscriber request. If the asset is not preloaded, in addition to the subscriber accounting, the transaction server must access the request video program and spool it for the video server. Depending upon the rate of use of the requested video program, the data might be stored in memory (for high volume use), on a disk or other mass storage device (for medium volume use), or in some other medium (for low volume use).

In the preferred mode of the present invention, the user is permitted to pause, reverse, or fast forward the requested video program though commands entered from the on-set subscriber box. These functions are intended to appear similar to normal VCR commands to the user. These commands are sent to the transaction server which utilizes them to control the corresponding video stream output of the video server subsystem. Thus the user is provided with all of the advantages of VCR rental without the need to physically transport the medium (i.e., cassette tape) back and forth between the rental store and the user site.

In view of the power and flexibility of the transaction server, other diverse but somewhat related functions may be provided. For example, a user might order a pizza delivery via the on-set subscriber box to transaction server interface, or the user might access the internet, e-mail, or faxes via the transaction server. If this interface is implemented over a readily available, publically accessible, network, such as the internet, many additional functions are possible.

### BRIEF DESCRIPTION OF THE DRAWINGS

Other objects of the present invention and many of the attendant advantages of the present invention will be readily appreciated as the same becomes better understood by reference to the following detailed description when considered in connection with the accompanying drawings, in which like reference numerals designate like parts throughout the figures thereof and wherein:
**Fig. 1** is a schematic diagram showing the operation of the overall video on demand system of the present invention;
**Fig. 2** is a schematic diagram showing spooling of the video programming data from typical mass storage devices;
**Fig. 3** is a schematic diagram showing the generation of a video stream from spooled data within a memory subsystem;
**Fig. 4** is a schematic diagram showing video streaming as synchronized on one minute boundaries;
**Fig. 5** is a schematic diagram showing operation of a video server platform;
**Fig. 6** is a schematic diagram showing video streaming of multiple programs from a single video server platform;
**Fig. 7** is a schematic diagram showing video streaming from video programming data spooled on disk drive mass storage units;
**Fig. 8** is a schematic diagram showing video streaming from video programming data stored on both disk drive mass storage units and memory subsystems;
**Fig. 9** is a block diagram of a maximum configuration video server; and
**Fig. 10** is a detailed diagram of the operation of the transaction server of the preferred mode of the present invention.

### DETAILED DESCRIPTION OF THE PREFERRED EMBODIMENTS

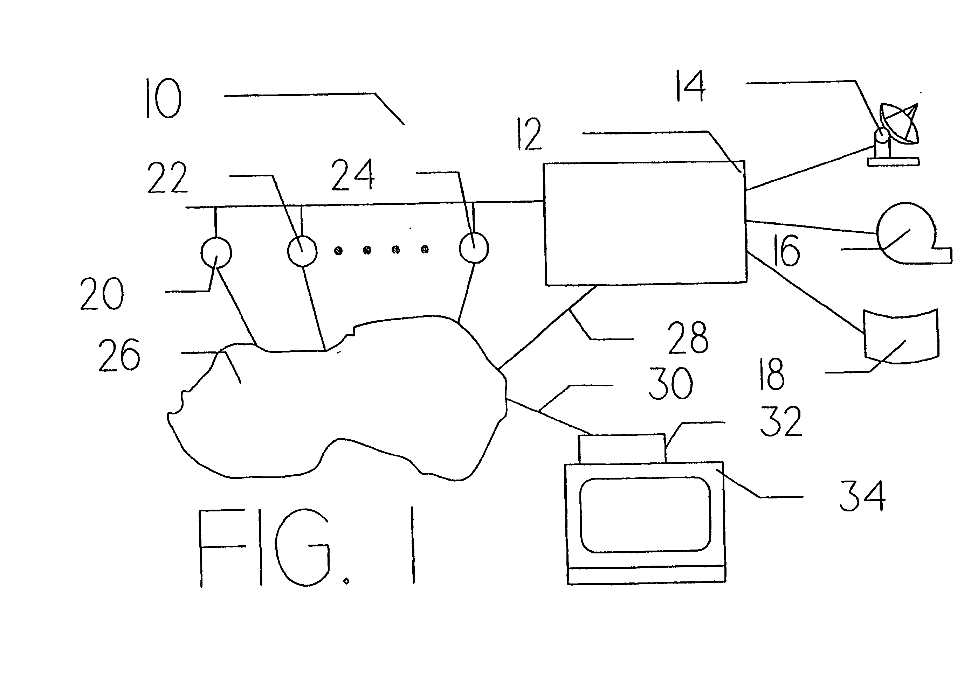

**Fig. 1** is a schematic diagram 10 showing the overall video on demand system of the present invention. A subscribing user (not shown) is positioned adjacent standard television receiver 34. Through this television receiver, the user is capable of viewing video programming material transferred to his location via coaxial cable 30 from network 26 in the fashion currently known in the cable television industry. The interface between coaxial cable 30 and standard television receiver 34 is provided by subscriber box 32, which provides the conversion between MPEG-2 digitized video format and the analog video signal required by television receiver 34.

In many respects, subscriber box 32 is similar to the subscriber boxes utilized with existing cable television systems with the slight functional differences described in more detail below. The basic reason for these slight differences is to permit a subscribing user to communicate with transaction server 12 in a two directional manner. Not only does subscriber box 32 receive video programming data via coaxial cable 30 and present it to television receiver 34, but subscriber box 32 is capable of transferring user requests via coaxial cable 30 and network 26 to transaction server 12 via path 28. The most important requests in accordance with the present invention are those which initiate and control the individualized video on demand programming.

When the user is interested in viewing a particular video program, a request is made from subscriber box 32 and transferred to transaction server 12 via coaxial cable 30, network 26, and path 28. Transaction server 12, a Unisys 2200 system in the preferred embodiment, is provided access to video programming information from satellite receiver 14, from analog video storage 16 and digital mass storage 18. In each instance, the video programming data is either received in digital form or converted to digital form. According to the preferred embodiment of the present invention, the MPEG-2 standardized format is utilized.

Whenever a request is received, transaction server 12 checks various security parameters, makes appropriate subscriber billing entries, and generally performs all of the necessary administrative functions as described below in greater detail. Additionally, transaction server 12 stores digital video data for transmission by the video server assigned to the requesting subscriber. One of video server platforms 20, 22, ...., or 24 is assigned the task by transaction server 12 and the stored digital video data is supplied via the digital data bus shown. In the preferred mode of the present invention, each video server platform is a separate industry compatible, Windows NT based, computer platform. Once transfered to the selected video server, the requested video programming is transmitted via network 26 and coaxial cable 30 to subscriber box 32 and television receiver 34.

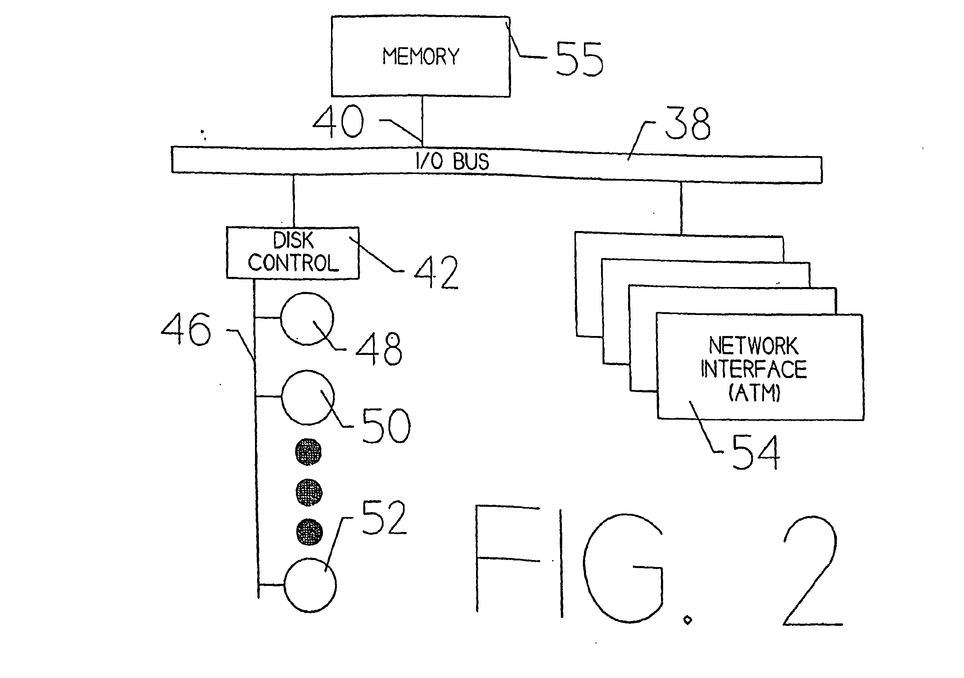

**Fig. 2** is a schematic diagram showing the spooling of data from digital disk mass storage devices. For the preferred mode of the present invention, the digitized video programming data is stored in MPEG-2 format. In the spooling process, the MPEG-2 organized and placed into memory as a programming file 55. To produce commercially acceptable video, 3mbits/second is required. That means that a two hour video program requires the about 2.7 billion bytes of data storage. Because of cost considerations, many of the programs having low and moderate usage will best be stored on mass storage disk until requested

Individual storage disks 48, 50, ..., and 52 each store a number of video programs in MPEG-2 format. As requested, this data is transferred via storage bus 46 through disk control 42 through I/O bus 38 and placed in memory 55 via path 40. A software program spools the data to the ATM interface 54 at the required speed..

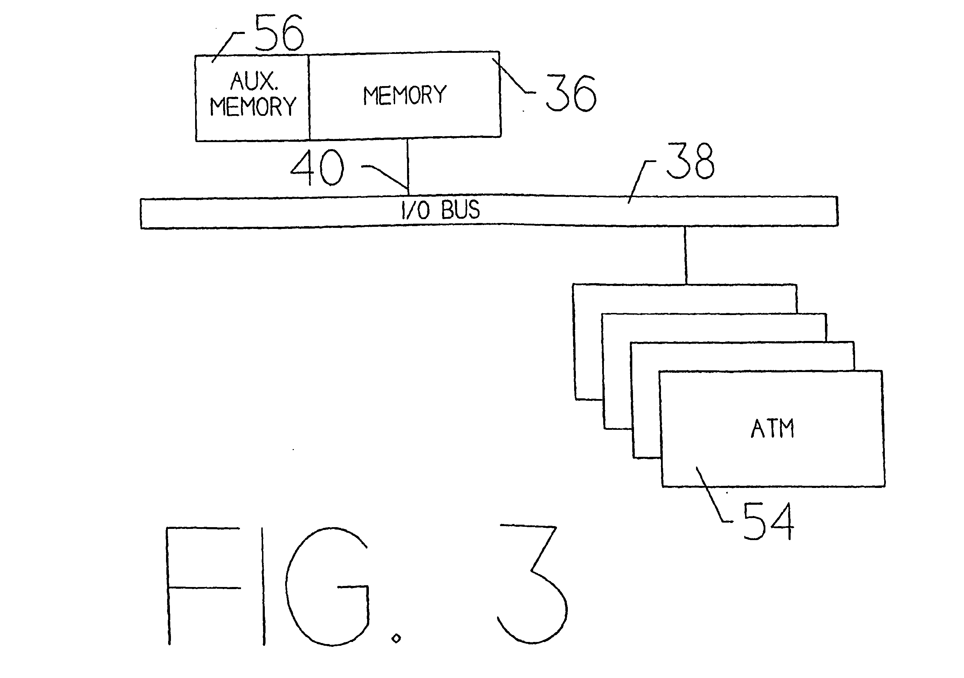

**Fig. 3** is a schematic diagram showing spooling of high volume digitized video program. For those programs having a high user demand, it is much more efficient to spool the program files from random access memory rather than mass storage disk systems. In this context, high volume means a high probability that the given program will be in use during high service volume periods. That means that there will need to be random access storage allocated to the storage of that given program during peak memory demand. As a result, the system should simply allocate random access storage to that given program. Very popular, recent movies are typical of such high volume programs.

If a program is a high volume program, it is preferably stored in auxiliary memory 56. Upon request, software residing in memory 36 directs the storing of data from auxiliary memory 56 and transferring it via path 40 and I/O bus 38 to ATM interface 54. It should be noted that this is significantly more efficient than the storing operation shown in Fig. 2, since the video data only needs to be read out of memory instead of having to be loaded from disk each time the data is used. Furthermore, there is no additional cost if a program is of sufficiently high volume that the required random access memory must be allocated to the program anyway.

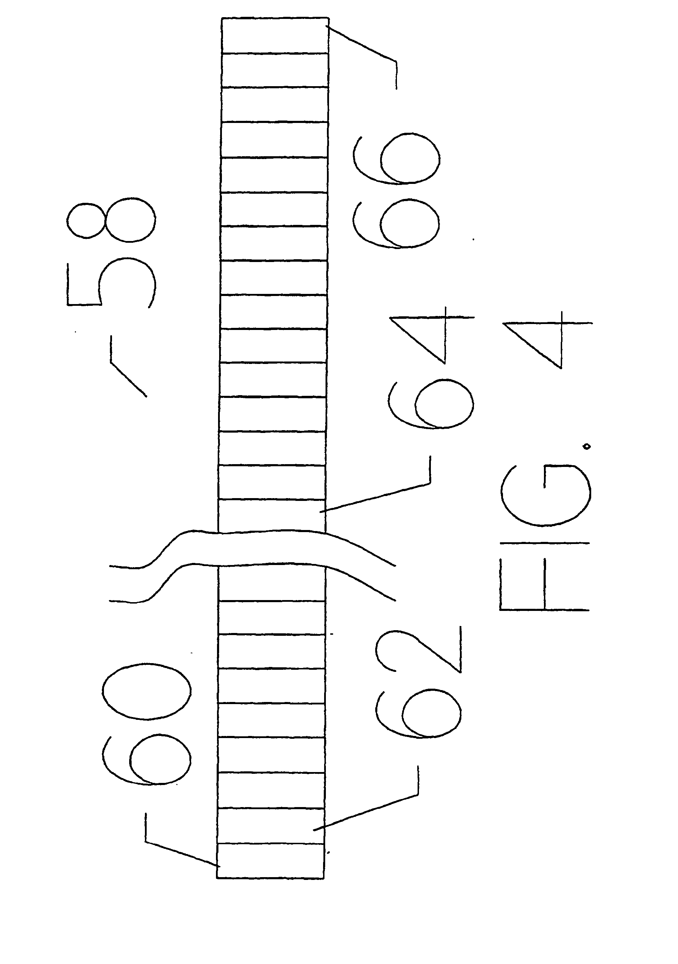

**Fig. 4** is a schematic diagram 58 showing the synchronization of a given video program around one minute time slots. In concept, the present invention provides subscribers with video on demand. However, as a practical matter, by synchronizing multiple users around one minute time slots, the maximum number of transmissions to all users of the given video program cannot exceed 60 per hour of programming and 120 for a two hour standard video program. That means that for a given high volume program (which may be requested by hundreds or even thousands within the length of time to view the program) each requester is assigned to an appropriate time slot.

First time slot 60 provides the first minute of video programming to one or more requesters. During one minute time slot 62, the initial requesters receive the second minute of programming, and one or more requesters may be starting with the first minute of programming. At the nth time slot 64, the initial requesters are viewing the nth minute of programming, the second group of requesters is viewing the n-1 minute of programming, and the nth group of requesters is viewing the first minute of programming. At final time slot 66, the initial requesters are viewing the final minute of programming, the second group of requesters is viewing the second to last minute of programming, and a new group of requesters is viewing the initial minute of programming.

The reduction in total data requirements utilizing these one minute time slots is substantial. Commonly assigned U.S. Patent No. 5,583,561, issued to Baker et al., discusses this feature in greater detail. The total delay to a requester is no more than one minute and will average one half minute, making the process perfectly acceptable and barely noticeable to the subscribers.

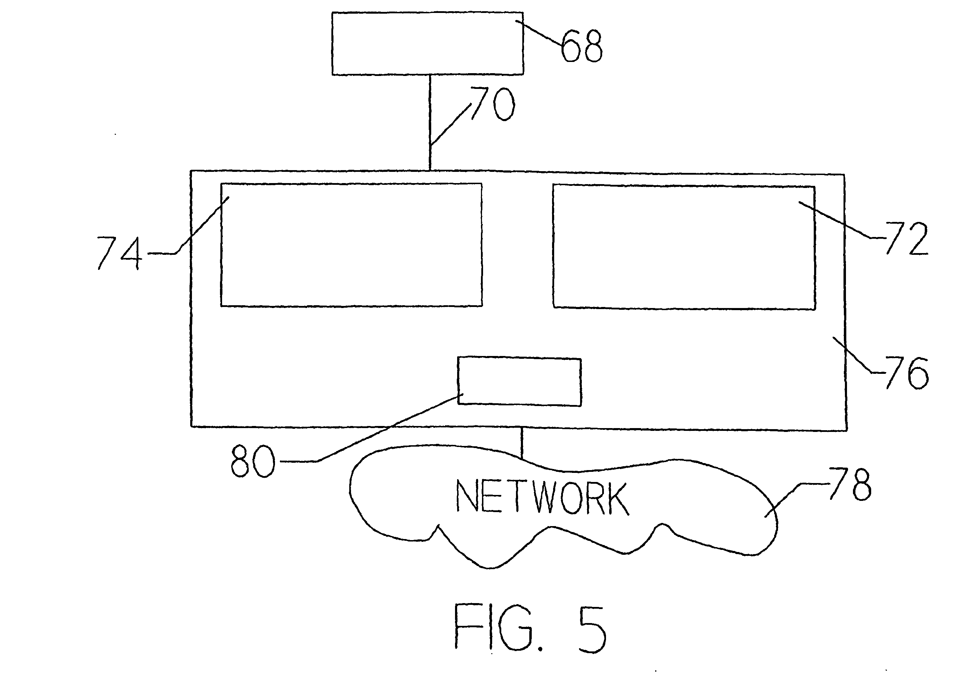

**Fig. 5** is a schematic diagram of a single industry compatible, Windows NT based video server platform. The video server subsystem is composed of a number of separate and largely independent video server platforms. Each is configured to have a maximum memory configuration and maximum I/O configuration. Digitized video programming data in the MPEG-2 format are moved from transaction server 68 via interconnect 70 into the assigned video server platform. Program 74 and program 72 are shown. These programs are placed onto network 78 under control of transmission control software 80 for transfer to the requesting subscriber(s). For a given program being sent to a single user, transmission control software 80 simply retrieves the video data from memory in a sequential fashion at 3 mbits/second and places it on network 78.

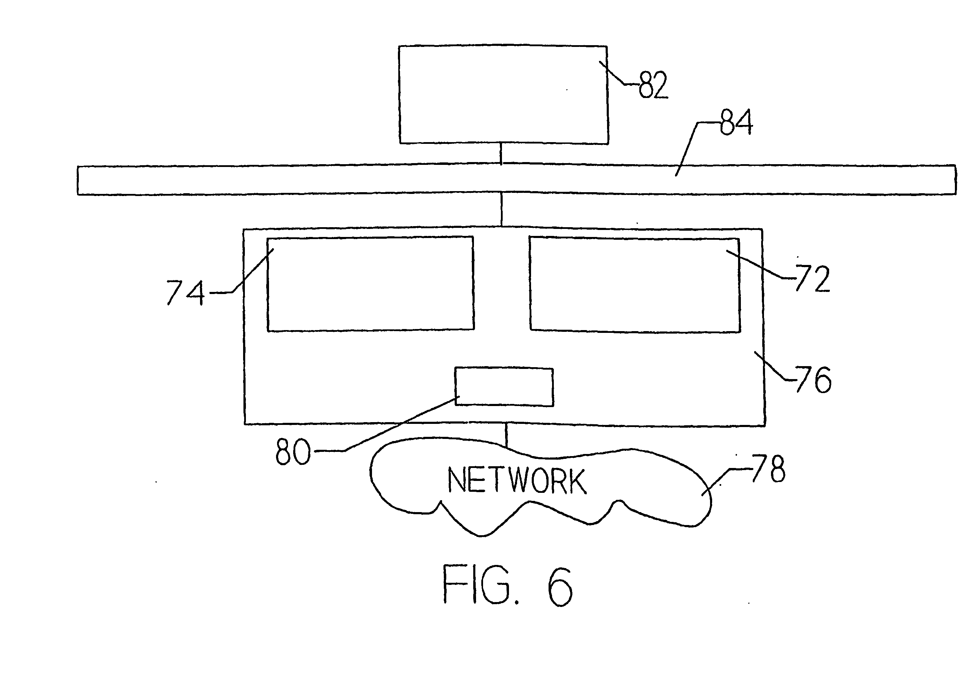

**Fig. 6** is a schematic diagram showing transfer of high volume program 82 into the video server platform of Fig. 5. The transfer is performed by the transaction server as discussed above. The transfered data is transferred to the video server platform via I/O bus 84 Up to ten programs can be stored and streamed from a single video server For simplicity, only one video server is shown. For a view of multiple video servers within a system, refer to Fig. 1.. All other referenced elements are as previously described.

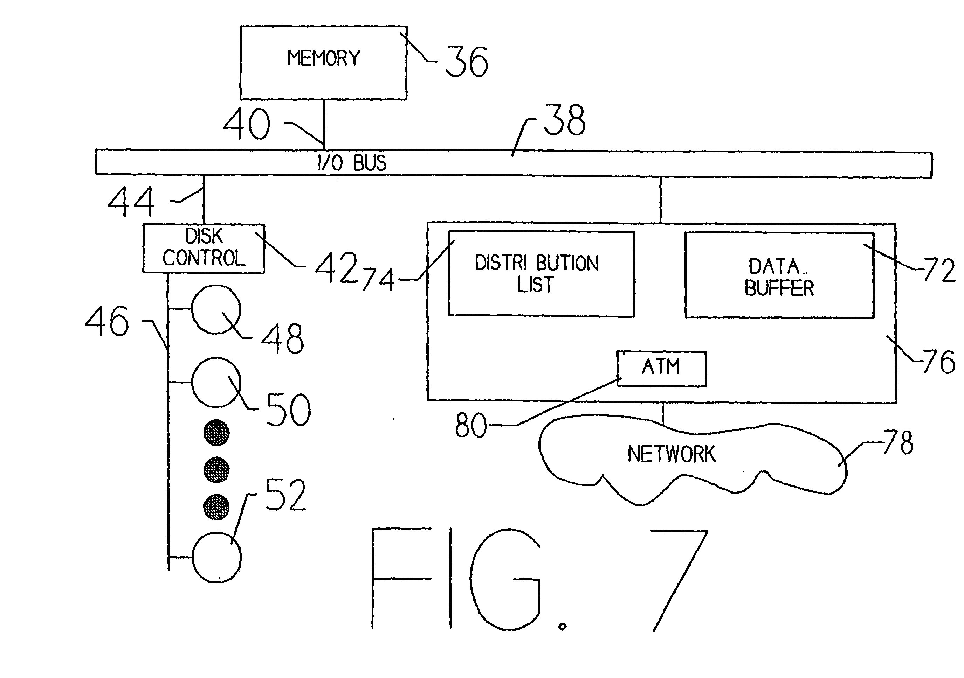

Fig. 7 is a schematic diagram showing the spooling of low to moderate volume digitized video program data. For lower volume programs, storage on disk storage mass memory may be appropriate. A low volume video program is one in which it is highly unlikely that more than one request is received during the runtime of the video program. Therefore, the servicing of the request is most probably an index sequential task for retrieving the data and transmitting it to the user. This is readily distinguishable from the high volume video programs for which transmissions within multiple and perhaps many of the one minute time slots is expected (see also Fig. 4). These programs are spooled to the video server platform as shown. The remaining referenced elements are as previously described.

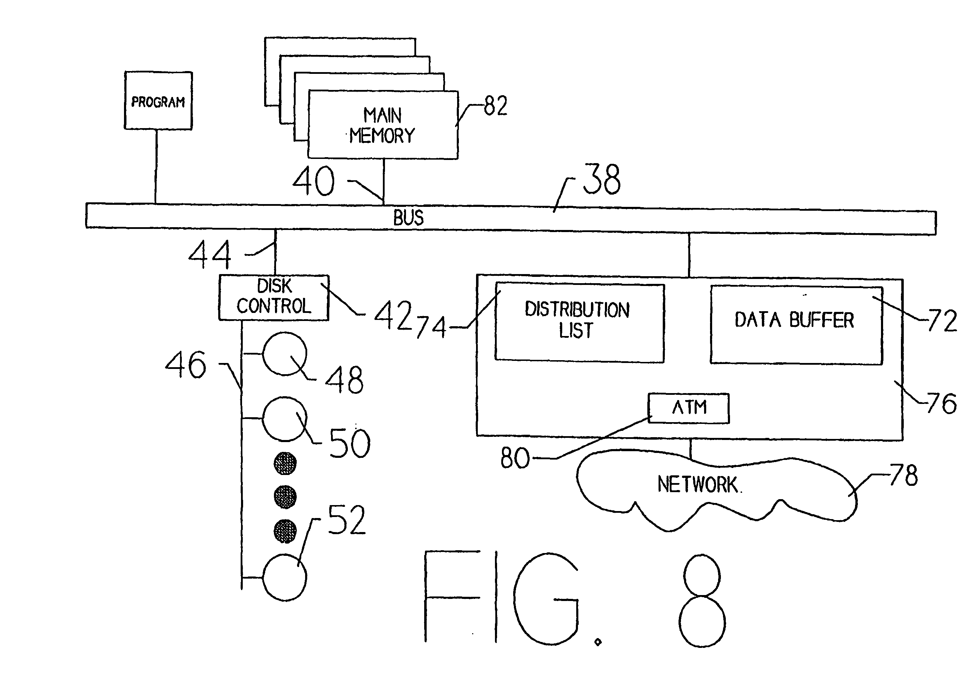

Fig. 8 is a schematic diagram showing transfer of low and high volume video programs to the same video server platform. All referenced elements are as previously described.

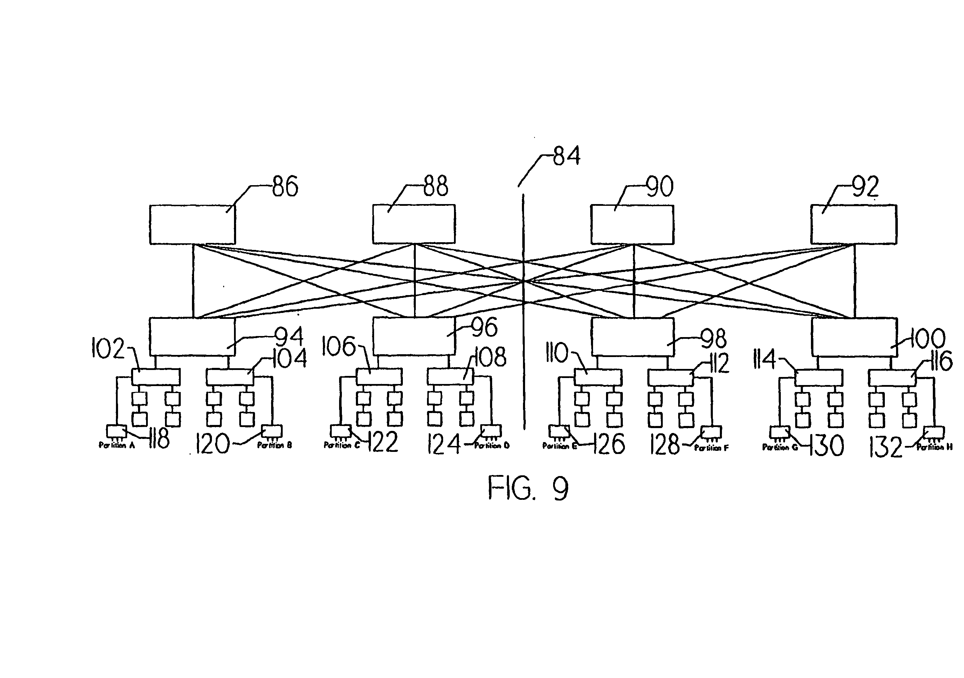

Fig. 9 is a block diagram 84 of the maximum configuration of the *video* server of the preferred mode of the present invention. In this preferred mode, the video server is implemented using a current model Unisys mainframe system. In accordance with this product, the system is expandable from a single processor, single main memory, and single I/O controller to the maximum system shown.

Instruction processors 102, 104, 106, 108, 110, 112, 114, and 116 communicate with main memories 86, 88, 90, and 92 via crossbar interconnects 94, 96, 98, and 100. Each instruction processor may be coupled with up to four third-level caches, as shown. Direct Input/Output bridges 118, 120, 122, 124, 126, 128, 130, and 132 each handle video output functions. Each of the direct Input/Output bridges may be partitioned into separate partitions as shown. Additional description of partitioning may be found in U.S. Patent Application Serial No. 08/779,472, filed January 7,1997, commonly assigned to the present invention.

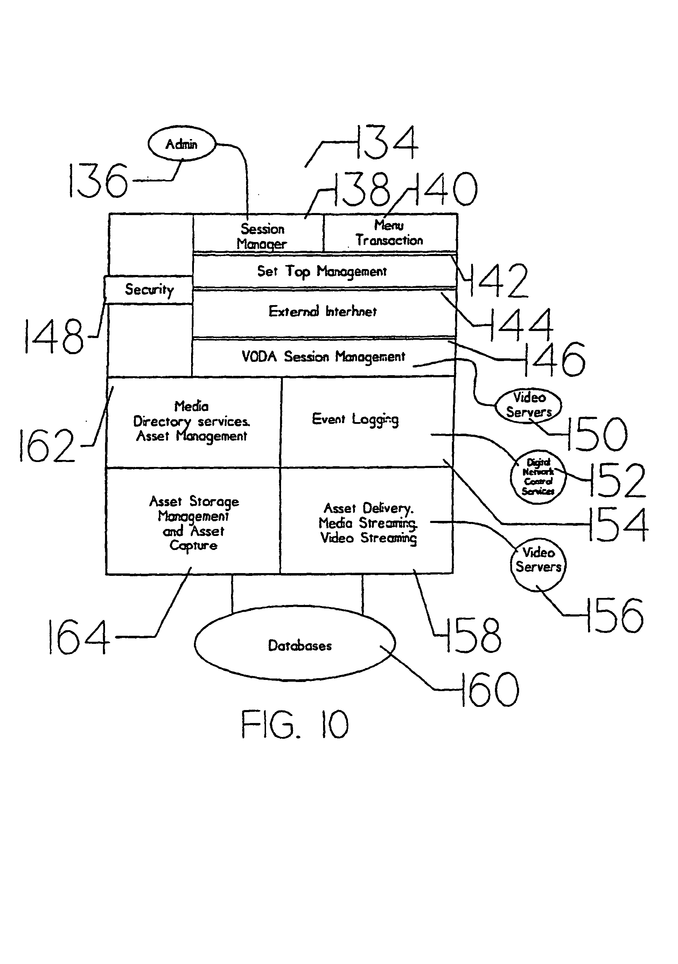

**Fig. 10** is a detailed functional diagram 134 of the transaction server. Communication with subscriber box 32 (see also Fig. 1) is managed by set top management module 142. Initial requests are selected by the user and honored through utilization of menu transaction module 140. After initiation of the servicing of a given request, control of the matter is given to session manager 138 for completion. Any and all communication with the transaction server are monitored by security module 148. Administration module 136 provides overall control of the transaction server.

The transaction server may be utilized to interface with the internet. The selected hardware and software system selected for the preferred mode provide internet server facilities in a commercially usable form. Video server session management module 146 provides the detailed functions (e.g., spooling of digital video programming) associated with the primary video on demand service. These control functions are directly interfaced to the video server subsystem via video server interface 150.

Event logging module 154 journals the functions performed. This log is made available to digital network control services 152. Media directory services and asset managment module 162 provides long term control and asset management. Historical storage of these data is performed by asset storage management and asset capture.

In performing the actual video on demand service, the appropriate requested digitized video program is accessed from databases 160. It is spooled by asset delivery, video streaming module 158. The transfer is made via video server interface 156 (see also Fig. 1).

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A video on demand system (10) for supplying video programs to a multiplicity of subscriber receivers (32) each subscriber receiver (32) operated by a user, the video on demand system (10) having a transaction server (12) and a video server (20, 22, 24), the transaction server (12) accomplishing all of the functions of the video on demand system (10) except for the streaming function performed by the video server (20, 22, 24), the video server (20, 22, 24) being responsively coupled to the transaction server (12) and to the subscriber receivers (32) for transferring the video programs to the subscriber receivers (32), wherein the transaction server (12) is implemented on a first computer platform and the video server (20, 22, 24) is implemented on a second computer platform separate from the first computer platform, and wherein
the video programs are stored and available to the transaction server (12) as programming data in a storage means (14, 16, 18) connected to the transaction server (12),
the transaction server (12) is connected to store one of the video programs received from the storage means (14, 16, 18) and to provide the stored video program to the video server (20, 22, 24) responsive to a request from a user through one of the subscriber receivers (32) for one of the video programs, and
the video server (20, 22, 24) is connected across a network (26) to provide the programming data to the subscriber receivers (32) responsive to the transaction server (12), and further to modify transmission of the programming data in response to commands, said commands including pause, reverse or fast forward commands provided by the users to the subscriber receivers (32) and sent by the subscriber receivers (32) to the transaction server (12).

2. The video on demand system according to claim 1, wherein the video server (20, 22, 24) organizes the programming data from the transaction server (12) into segments (60, 62, 64, 66; 58) and sends the segments (60, 62, 64, 66; 58) to the subscriber receivers (32) responsive to programming commands sent by the user via the subscriber receiver (32) to the transaction server (12) for initiating one of the video programs, and wherein the programming commands for ordering transmission of one of the video programs is received by the video server (20, 22, 24), wherein the programming commands determine which of the segments (60, 62, 64, 66; 58) is next sent to the user by the video server (20, 22, 24).

3. The video on demand system according to claim 2, wherein the segments (60, 62, 64, 66; 58) are sized to play at the subscriber receiver (32) in short intervals.

4. The video on demand system according to claim 3, wherein the short intervals are of approximately one minute duration.

5. The video on demand system according to claim 3, wherein
the segments (60, 62, 64, 66; 58) are sized to play at the subscriber receiver (32) in short intervals being organized by the video server (20, 22, 24) so as to form a continuous data stream playable as the video program, and wherein signals from the transaction server (12), responsive to the programming commands from the subscriber receiver (32), direct which of the segments (60, 62, 64, 66; 58) are sent by the video server (20, 22, 24).

6. The video on demand system according to claim 1, wherein the video server (20, 22, 24) further comprises an industry compatible, windows based computer platform.

7. The video on demand system according to claim 1, wherein the video server (20, 22, 24) further comprises a plurality of industry compatible, windows based computer platforms.

8. The video on demand system according to claim 1, wherein the transaction server (12) further comprises a Unisys mainframe computer system.

9. The video on demand system according to claim 1, wherein the programming data further comprises MPEG-2 format.

10. The video on demand system according to claim 1, wherein the programming data is spooled video, and wherein the supply of the spooled video to the subscriber receiver (32) is via a connection that provides for video streaming, and wherein the subscriber receiver (32) is a cable television receiver (34) having means for enabling user generated service requests and for enabling user generated programming play commands.

11. The video on demand system according to claim 10, wherein the spooled video further comprises MPEG-2.

12. A method of providing video on demand services comprising:
a. receiving at a transaction server (12) implemented on a first computer platform, a video on demand request to play a video from a subscriber,
b. processing the video on demand request to play a video at the transaction server (12);
c. spooling a video program corresponding to the video on demand request for serving the request to the subscriber from a storage means (14, 16, 18) to the transaction server (12);
d. transferring the spooled video program from the transaction server (12) to a video server (20, 22, 24) implemented on a second computer platform separate from the first computer platform, whereat the transaction server (12) accomplishes all of the functions of the video on demand system (10) except for the streaming function performed by the video server (20, 22, 24);
e. streaming the spooled video program from the video server (20, 22, 24) to the subscriber;
f. during the streaming, the video server listening to the transaction server for any play modification signals; and
g. if any of the play modification signals are received by the video server (20, 22, 24), responding to corresponding play modification commands by altering the streaming of the spooled video program to the subscriber in accordance with the play modification signals, said commands including pause, reverse or fast forward commands provided by the users to the subscriber receivers (32) and sent by the subscriber receivers (32) to the transaction server (12)..

13. The method according to claim 12, wherein the video server (20, 22, 24) upon receiving the spooled video program in step d, segments the spooled video into small segments, and wherein in step f, the video server (20, 22, 24) provides the stream as a continuous serial flow of segments unless in step g, the play modification signals request a change in the streaming, whereupon the video server (20, 22, 24) alters the streaming to comply with the play modification signals.

14. The method according to claim 12, further comprising:
a. pausing the streaming in response to a play modification pause signal from the subscriber.

15. The method according to claim 12, further comprising:
a. reversing the streaming in response to a play modification reverse signal from the subscriber.

16. The method according to claim 12, further comprising:
a. fast forwarding the streaming in response to a play modification fast forward from the subscriber.

17. The method according to claim 12, wherein the processing step further comprises:
a. performing subscriber accounting to enable billing the subscriber for the video on demand request.

## Patentansprüche

1. Ein Video-Auf-Anfrage-System (10) zur Bereitstellung von Videoprogrammen an eine Vielzahl von Abonnentenempfänger (32), wobei jeder Abonnentenempfänger (32) durch einen Benutzer betrieben wird, wobei das Video-Auf-Anfrage-System (10) einen Transaktionsserver (12) und einen Videoserver (20, 22, 24) hat, wobei der Transaktionsserver (12) alle Funktionen des Video-Auf-Anfrage-Systems (10) erfüllt, mit Ausnahme der Streaming-Funktion, die vom dem Videoserver (20, 22, 24) erfüllt wird, wobei der Videoserver (20, 22, 24) nach Bedarf mit dem Transaktionsserver (12) und mit den Abonnentenempfängern (32) zur Übertragung der Videoprogramme an die Abonnentenempfänger (32) gekoppelt ist, worin der Transaktionsserver (12) auf einer ersten Computerplattform implementiert ist und der Videoserver (20, 22, 24) auf einer zweiter Computerplattform implementiert ist, die von der ersten Computerplattform getrennt ist, und worin
die Videoprogramme gespeichert und verfügbar sind für den Transaktionsserver (12) als Programmdaten in einem Speichermittel (14, 16, 18), das mit dem Transaktionsserver (12) verbunden ist,
der Transaktionsserver (12) verbunden ist, um ein der Videoprogramme zu speichern, das von dem Speichermittel (14, 16, 18) empfangen wurde und um die gespeicherten Videoprogramme dem Videoserver (20, 22, 24) als Reaktion auf eine Anforderung von einem Benutzer durch einen der Abonnentenempfänger (32) für ein der Videoprogramme bereitzustellen, und
der Videoserver (20, 22, 24) über ein Netzwerk (26) verbunden ist, um die Programmdaten den Abonnentenempfängern (32) als Reaktion auf den Transaktionsserver (12) bereitzustellen, und weiterhin um die Übertragung der Programmdaten als Reaktion auf Befehle zu verändern, wobei die Befehle Pause, Rücklauf oder Schnellvorlauf-Befehle einschließen, die von den Benutzern den Abonnentenempfängern (32) bereitgestellt werden, und von den Abonnentenempfängern (32) an den Transaktionsserver (12) gesendet werden.

2. Das Video-Auf-Anfrage-System gemäß Anspruch 1, worin der Videoserver (20, 22, 24) die Programmdaten vom Transaktionsserver (12) in Segmenten (60, 62, 64, 66; 58) organisiert und die Segmente (60, 62, 64, 66; 58) an die Abonnentenempfänger (32) als Reaktion auf Programmbefehle sendet, die durch den Benutzer über den Abonnentenempfänger (32) an den Transaktionsserver (12) gesendet werden, um ein der Videoprogramme einzuleiten, und worin die Programmbefehle zur Bestellung der Übertragung von einem der Videoprogramme durch den Videoserver (20, 22, 24) empfangen werden, worin die Programmbefehle bestimmen, welches der Segmente (60, 62, 64, 66; 58) als nächstes dem Benutzer durch den Videoserver (20, 22, 24) gesendet wird.

3. Das Video-Auf-Anfrage-System gemäß Anspruch 2, worin die Segmente (60, 62, 64, 66; 58) dimensioniert sind, um an dem Abonnentenempfänger (32) in kurzen Intervallen abgespielt zu werden.

4. Das Video-Auf-Anfrage-System gemäß Anspruch 3, worin die kurzen Intervalle eine Dauer von in etwa einer Minute haben.

5. Das Video-Auf-Anfrage-System gemäß Anspruch 3, worin
die Segmente (60, 62, 64, 66; 58) dimensioniert sind, um an dem Abonnentenempfänger (32) in kurzen Intervallen abgespielt zu werden, wobei sie durch den Videoserver (20, 22, 24) organisiert sind, um einen kontinuierlichen Datenstrom zu bilden, der als Videoprogramm abspielbar ist, und worin Signale von dem Transaktionsserver (12) als Reaktion auf die Programmbefehle von dem Abonnentenempfänger (32) befehligen welche der Segmente (60, 62, 64, 66; 58) durch den Videoserver (20, 22, 24) zu senden sind.

6. Das Video-Auf-Anfrage-System gemäß Anspruch 1, worin der Videoserver (20, 22, 24) weiterhin eine dem Industriestandard entsprechende, Windows-basierende Computerplattform, umfasst.

7. Das Video-Auf-Anfrage-System gemäß Anspruch 1, worin der Videoserver (20, 22, 24) weiterhin eine Vielzahl von dem Industriestandard entsprechenden, Windows-basierenden Computerplattformen umfasst.

8. Das Video-Auf-Anfrage-System gemäß Anspruch 1, worin der Transaktionsserver (12) weiterhin ein Unisys-Zentralrechner-System, umfasst.

9. Das Video-Auf-Anfrage-System gemäß Anspruch 1, worin die Programmdaten weiterhin MPEG-2 Format umfassen.

10. Das Video-Auf-Anfrage-System gemäß Anspruch 1, worin die Programmdaten zwischengespeicherte Videodaten sind und worin die Zuführung der zwischengespeicherten Videodaten an den Abonnentenempfänger (32) über eine Verbindung erfolgt, die Video-Streaming bereitstellt, und worin der Abonnentenempfänger (32) ein Kabelfernsehempfänger (34) ist, der Mittel hat, um Benutzer-erzeugte Dienstleistungsanforderungen zu ermöglichen und um Benutzer-erzeugte Programmabspielbefehle zu ermöglichen.

11. Das Video-Auf-Anfrage-System gemäß Anspruch 10, worin die zwischengespeicherten Videodaten weiterhin MPEG-2 enthalten.

12. Ein Verfahren zur Bereitstellung von Video-Auf-Anfrage-Dienstleistungen, das folgendes umfasst:
a. Empfangen an einem Transaktionsserver (12), der auf einer ersten Computerplattform implementiert ist, einer Video-Auf-Anfrage-Anforderung von einem Abonnenten, um ein Video abzuspielen,
b. Verarbeiten der Video-Auf-Anfrage-Anforderung, um ein Video an dem Transaktionsserver (12) abzuspielen;
c. Zwischenspeichern eines Videoprogramms, das der Video-Auf-Anfrage-Anforderung entspricht, um die Anforderung an den Abonnenten zu liefern, von einem Speichermittel (14, 16, 18) an dem Transaktionsserver (12);
d. Übertragen des zwischengespeicherten Videoprogramms von dem Transaktionsserver (12) an einen Videoserver (20, 22, 24), der auf einer zweiter Computerplattform implementiert ist, die von der ersten Computerplattform getrennt ist, wobei der Transaktionsserver (12) alle Funktionen des Video-Auf-Anfrage-Systems (10) erfüllt, mit Ausnahme der Streaming-Funktion, die vom dem Videoserver (20, 22, 24) erfüllt wird;
e. Streamen des zwischengespeicherten Videoprogramms von dem Videoserver (20, 22, 24) an den Abonnenten, und
f. wobei während des Streamens der Videoserver auf den Transaktionsserver nach irgendwelchen Abspielabänderungssignalen lauscht, und
g. wenn irgendwelche der Abspielabänderungssignale durch den Videoserver (20, 22, 24) empfangen werden, das Reagieren auf entsprechende Abspielabänderungsbefehle durch die Änderung des Streamings des zwischengespeicherten Videoprogramms an den Abonnenten in Übereinstimmung mit den Abänderungssignalen, wobei die Befehle Pause, Rücklauf oder Schnellvorlauf-Befehle einschließen, die von den Benutzern den Abonnentenempfängern (32) bereitgestellt werden, und von den Abonnentenempfängern (32) an den Transaktionsserver (12) gesendet werden.

13. Das Verfahren gemäß Anspruch 12, worin der Videoserver (20, 22, 24) beim Empfang des zwischengespeicherten Videoprogramms in Schritt d. das zwischengespeicherte Video in kleine Segmente segmentiert, und worin in Schritt f. der Videoserver (20, 22, 24) den Stream als einen kontinuierlichen seriellen Strom von Segmenten bereitstellt, es sei denn, in Schritt g. die Abspielabänderungssignale eine Änderung in dem Streaming verlangen, woraufhin der Videoserver (20, 22, 24) den Streaming abändert, um mit dem Abspielabänderungssignalen übereinstimmend zu sein.

14. Das Verfahren gemäß Anspruch 12, das weiterhin folgendes umfasst:
a. Unterbrechen des Streaming als Reaktion auf ein Abspielabänderung-Unterbrechungssignal von dem Abonnenten.

15. Das Verfahren gemäß Anspruch 12, das weiterhin folgendes umfasst:
a. das Umkehren des Streamings als Reaktion auf ein Abspielabänderung-Umkehrsignal von dem Abonnenten.

16. Das Verfahren gemäß Anspruch 12, das weiterhin folgendes umfasst:
a. das schnelle Vorlaufen des Streamings als Reaktion auf ein Abspielabänderung-Schnellvorlauf von dem Abonnenten.

17. Das Verfahren gemäß Anspruch 12, worin der Verarbeitungsschritt weiterhin folgendes umfasst:
a. Durchführung von Abonnentenbuchführung, um die Abrechnung an den Abonnenten für die Video-Auf-Anfrage-Anforderung zu ermöglichen.

## Revendications

1. Un système de vidéo à la demande (10), pour fournir des programmes vidéo à une pluralité de récepteurs d'abonnés (32), chaque récepteur d'abonné (32) étant exploité par un utilisateur, le système de vidéo à la demande (10) comportant un serveur de transaction (12) et un serveur de vidéo (20, 22, 24), le serveur de transaction (12) accomplissant la totalité des fonctions du système de vidéo à la demande (10), sauf pour la fonction de flux continu, accomplie par le serveur de vidéo (20, 22, 24), le serveur de vidéo (20, 22, 24), étant couplé, en réponse, au serveur de transaction (12) et aux récepteurs d'abonné (32), pour transférer les programmes vidéo aux récepteurs d'abonné, dans lequel le serveur de transaction (12) est mis en oeuvre sur une première plateforme d'ordinateur et le serveur de vidéo (20, 22, 24) est mis en oeuvre sur une deuxième plateforme d'ordinateur, séparée de la première plateforme d'ordinateur, et dans lequel
les programmes vidéo sont stockés et disponibles au serveur de transaction (12), à titre de données de programmation, dans des moyens de stockage (14, 16, 18) connectés au serveur de transaction (12),
le serveur de transaction (12) est connecté pour stocker l'un des programmes vidéo reçus des moyens de stockage (14, 16, 18) et pour fournir le programme de vidéo stocké au serveur de vidéo (20, 22, 24), en réponse à une requête émanant d'un utilisateur, par l'intermédiaire d'un des récepteurs d'abonnés (32), au sujet de l'un des programmes vidéo, et
le serveur vidéo (20, 22, 24) est connecté à un réseau (26) pour fournir les données de programmation aux récepteurs d'abonnés (32), en réponse au serveur de transaction (12) et, en outre, pour modifier la transmission des données de programmation en réponse à des instructions, lesdites instructions comprenant des instruction de pause, de défilement en sens inverse ou de défilement rapide en sens avant, fournies par les utilisateurs aux récepteurs d'abonnés (32), et envoyés par les récepteurs d'abonnés (32), au serveur de transaction (12).

2. Le système de vidéo à la demande selon la revendication 1, dans lequel le serveur de vidéo (20, 22, 24) organise les données de programmation venant du serveur de transaction (12) en segments (60, 62, 64, 66; 58), et envoie les segments (60, 62, 64 66; 58) aux récepteurs d'abonnés (32) en réponse à des instructions de programmation envoyées par l'utilisateur, via le récepteur d'abonné (32), au serveur de transaction (12), pour initier l'un des programmes vidéo, et dans lequel les instructions de programmation, pour passer commande de la transmission d'un des programmes vidéo, sont reçues par le serveur vidéo (20, 22, 24), dans lequel les instructions de programmation déterminent quel est celui, parmi les segments (60, 62, 64, 66; 58), qui est le segment suivant envoyé à l'utilisateur par le serveur de vidéo (20, 22, 24).

3. Le système de vidéo à la demande selon la revendication 2, dans lequel les segments (60, 62, 64, 66; 58) sont dimensionnés pour une utilisation, sur le récepteur d'abonné (32), à de courts intervalles de temps.

4. Le système de vidéo à la demande selon la revendication 3, dans lequel les courts intervalles de temps sont d'une durée d'environ 1 minute.

5. Le système de vidéo à la demande selon la revendication 3, dans lequel les segments (60, 62, 64, 66; 58) sont dimensionnés pour utilisation au niveau du récepteur d'abonné (32), à de courts intervalles de temps, organisés par le serveur vidéo (20, 22, 24), de manière à former un flux de données continu exploitable en tant que programme vidéo, et dans lequel des signaux provenant du serveur de transaction (12), en réponse à des instructions de programmation venant du récepteur d'abonné (32), ordonnent celui des segments (60, 62, 64, 66; 58) qui est envoyé par le serveur vidéo (20, 22, 24).

6. Le système de vidéo à la demande selon la revendication 1, dans lequel le serveur vidéo (20, 22, 24) comprend en outre une plate-forme d'ordinateur à base windows, industriellement compatible.

7. Le système de vidéo à la demande selon la revendication 3, dans lequel le serveur de vidéo (20, 22, 24) comprend en outre une pluralité de plates-formes d'ordinateurs à base windows, industriellement compatibles.

8. Le système de vidéo à la demande selon la revendication 3, dans lequel le serveur de transaction (12) comprend en outre un système d'ordinateur à unité centrale Unisys.

9. Le système de vidéo à la demande selon la revendication 1, dans lequel les données de programmation sont en outre au format MPEG-2.

10. Le système de vidéo à la demande selon la revendication 1, dans lequel les données de programmation sont de la vidéo à transfert différé, et dans lequel la fourniture de vidéo à transfert différé au récepteur d'abonné (32) se fait via une connexion fournissant un flux vidéo continu, et dans lequel le récepteur d'abonné (32) est un récepteur de télévision par câble (34) comportant des moyens pour permettre des requêtes de service, générées par l'utilisateur, et pour permettre des instructions de lecture de programmation, générées par l'utilisateur.

11. Le système de vidéo à la demande selon la revendication 10, dans lequel la vidéo à transfert différé est en outre de type MPEG-2.

12. Un procédé de fourniture de services de vidéo à la demande, comprenant :
a. la réception, à un serveur de transaction (12), mis en oeuvre sur une première plateforme d'ordinateur, d'une requête, de la part d'un abonné, de vidéo à la demande, pour fournir une vidéo,
b. le traitement de la requête de vidéo à la demande, pour fournir de la vidéo au serveur de transaction (12);
c. la réalisation d'un transfert différé d'un programme vidéo correspondant à la requête de vidéo à la demande, afin de servir la requête à l'abonné, depuis des moyens de stockage (14, 16, 18), au serveur de transaction (12).
d. le transfert du programme vidéo à transfert différé, du serveur de transaction (12) à un serveur de vidéo (20, 22, 24);
e. la production en flux continu du programme de vidéo à transfert différé, du serveur de vidéo (20, 22, 24) à l'abonné, et
f. pendant la fourniture de flux continu, le serveur vidéo se tenant à l'écoute du serveur de transaction, au sujet d'éventuels signaux de modification de lecture, et
g. si l'un quelconque des signaux de modification de lecture est reçu par le serveur de vidéo (20, 22, 24), la réponse à des instructions correspondantes de modification de lecture par une modification de la production de flux continu de programme de vidéo à transfert différé à l'abonné, selon les signaux de modification de lecture, lesdites instructions comprenant des instruction de pause, de défilement en sens inverse ou de défilement rapide en sens avant, fournies par les utilisateurs aux récepteurs d'abonnés (32), et envoyés par les récepteurs d'abonnés (32), au serveur de transaction (12).

13. Le procédé selon la revendication 12, dans lequel le serveur de vidéo (20, 22, 24), à réception du programme de vidéo à transfert différé à l'étape d, segmente la vidéo à transfert différé en de petits segments et dans lequel, à l'étape f, le serveur de vidéo (20, 22, 24) fournit le flux continu sous forme de flux série continu de segments, sauf si, à l'étape g, les signaux de modification de lecture demandent un changement de production de flux continu, à la suite de quoi le serveur de vidéo (20, 22, 24) modifie la production de flux continu pour satisfaire aux signaux de modification de lecture.

14. Le procédé selon la revendication 12, comprenant en outre :
a. la mise en pause de la production de flux continu, en réponse à la réception d'un signal de pause de modification de lecture provenant de l'abonné.

15. Le procédé selon la revendication 12, comprenant en outre :
a. la mise en mouvement inversé de la production de flux continu, en réponse à un signal de mise en mouvement inversé de modification de lecture émanant de l'abonné.

16. Le procédé selon la revendication 12, comprenant en outre :
a. l'avancement rapide de la production de flux continu, en réponse à un signal d'avancement rapide de modification de lecture émanant de l'abonné.

17. Le procédé selon la revendication 12, dans lequel l'étape de traitement comprend en outre :
a. l'exécution de la comptabilisation d'abonné, pour permettre la facturation de l'abonné au sujet de la requête de vidéo à la demande.
